Europäisches Patentamt

European Patent Office

Office européen des brevets

(11) Veröffentlichungsnummer: **0 099 565**
**A2**

(12) # EUROPÄISCHE PATENTANMELDUNG

(21) Anmeldenummer: **83107039.6**

(22) Anmeldetag: **18.07.83**

(51) Int. Cl.³: **H 04 B 3/44**

(30) Priorität: **21.07.82 DE 3227299**

(43) Veröffentlichungstag der Anmeldung:
**01.02.84 Patentblatt 84/5**

(84) Benannte Vertragsstaaten:
**AT BE CH DE FR IT LI NL SE**

(71) Anmelder: **SIEMENS AKTIENGESELLSCHAFT**
**Berlin und München Wittelsbacherplatz 2**
**D-8000 München 2(DE)**

(72) Erfinder: **Ziegler, Alfred, Dipl.-Ing.**
**Laimer-Platz 1**
**D-8000 München 21(DE)**

(54) **Schaltungsanordnung zur Fernspeisung von elektrischen Verbrauchern.**

(57) Schaltungsanordnung zur Speisung von elektrischen Verbrauchern aus einer Einrichtung zur Fernspeisung mittels Gleichstrom-Reihenspeisung, wobei die Verbraucher jeweils über eine wenigstens einen Gleichstromwandler enthaltende Stromwandleranordnung an einen Fernspeisekreis angeschlossen sind. Derartige Schaltungsanordnungen erfordern besondere Maßnahmen, wenn Verbraucher gespeist werden sollen, die während der Einschaltphase einen erhöhten Strombedarf haben. Die Erfindung löst dieses Problem dadurch, daß die Stromwandleranordnung durch eine Steuereinrichtung zeitverzögert oder durch ein den Betriebszustand des Verbrauchers charakterisierendes Kriterium hinsichtlich ihrer Stromabgabe an den Verbraucher variierbar ist. Die Schaltungsanordnung läßt sich besonders vorteilhaft zur Fernspeisung von Zwischenregeneratoren mit Spannungswandlern am Versorgungsspannungseingang verwenden.

FIG 3

SIEMENS AKTIENGESELLSCHAFT      Unser Zeichen
Berlin und München              VPA 82 P 1568 E

Schaltungsanordnung zur Fernspeisung von elektrischen
Verbrauchern

Die Erfindung bezieht sich auf eine Schaltungsanordnung zur Fernspeisung von elektrischen Verbrauchern aus einer Einrichtung zur Fernspeisung mittels Gleichstrom-Reihenspeisung aus wenigstens einer Konstantstromquelle, wobei an verschiedenen Stellen des Fernspeisekreises jeweils wenigstens ein Verbraucher über eine wenigstens einen Gleichstromwandler enthaltende Stromwandleranordnung an den Fernspeisekreis anschließbar ist.

Eine derartige Schaltungsanordnung ist bereits aus der Zeitschrift telcomreport 3 (1980), Heft 3, Seiten 210 und 211 bekannt.

Die bekannte Schaltungsanordnung dient zur Stromversorgung von Zwischenregeneratoren auf Lichtwellenleiter-Strecken. Bei dem Fernspeisesystem ist in jeder Zwischenregeneratorstelle ein Umrichter vorgesehen, der die Betriebsspannungen für die Regeneratoren abgibt. Von der speisenden Zwischenregeneratorstelle aus werden über ein zum Glasfaserkabel parallel verlegtes Fernspeisekabel alle Umrichtereingänge mit konstantem Gleichstrom in einer Reihenschaltung betrieben.

Soll eine solche mit Umrichtern beschaltete Fernspeisestrecke dafür geeignet sein, Zwischenregeneratoren mit unterschiedlichen Betriebsspannungen zu betreiben, so kann man einen einheitlichen Strecken-Umrichter verwenden, der in der Lage ist, alle in Frage kommenden Betriebsspannungen abzugeben. Dies erfordert jedoch einen erheblichen elektrischen Schaltungsaufwand im Strecken-Umrichter. Andererseits ist eine Verwendung individueller Wd 1 EM /20.7.1982 Spannungswandler an den Speiseeingängen der Zwischenregeneratoren deshalb nicht ohne weiteres möglich, weil der Gleichstromwandler nicht in der Lage ist, den erhöhten Strombedarf, den ein Spannungswandler während der Einschaltphase hat, wenn er nach dem bekannten Prinzip des Eintakt-Durchfluß- oder des Eintakt-Sperrwandlers aufgebaut ist, zu befriedigen.

Aus der Siemens-Zeitschrift 48 (1974), Beiheft "Nachrichten-Übertragungstechnik", S. 130 ist ferner bereits ein als Strom-Spannungswandler arbeitender Umrichter für ferngespeiste Zwischenverstärkerstellen bekannt, der zwei als Stromwandler arbeitende Eingangskreise mit je einem Transformator enthält. Je nach Verbraucherlast werden die Stromübersetzungen der beiden Transformatoren manuell gemeinsam so eingestellt, daß der Spannungsabfall des Summenstromes am Lastwiderstand einen vorgegebenen Wert hat.

Aufgabe der Erfindung ist es, eine Schaltungsanordnung der eingangs genannten Art derart auszubilden, daß sich Verbraucher, die nach dem Einschalten zunächst einen erhöhten Strombedarf haben, ohne weiteres und sicher in Betrieb nehmen lassen.

Gemäß der Erfindung wird die Schaltungsanordnung zur Lösung dieser Aufgabe derart ausgebildet, daß die Stromwandleranordnung durch eine Steuereinrichtung zeitverzögert oder durch ein den Betriebszustand des Verbrauchers charakterisierendes Kriterium hinsichtlich ihrer Stromabgabe an den Verbraucher variierbar ist.

Durch diese Maßnahmen ergibt sich der Vorteil, daß die Verbraucher während der Anlaufphase einen erhöhten Strom aufnehmen können, ohne daß dies mit einer wesentlich erhöhten Leistungsaufnahme des Fernspeisekreises im eingeschwungenen Zustand verbunden ist.

Man kann die Steuereinrichtung als Verzögerungseinrichtung ausbilden, die nach Ablauf einer vorgegebenen zeitlichen Verzögerung, die auf das Einschwing- bzw. Einschaltverhalten des Verbrauchers abgestellt ist, die Stromabgabe ändert. Die an den verschiedenen Stellen des Fernspeisekreises vorzusehenden Verzögerungseinrichtungen können dabei die gleiche Verzögerungszeit oder verschiedene, z.B. im Hinblick auf die Eigenschaften des jeweiligen Verbrauchers bemessene Verzögerungen haben.

Der Anlauf des Verbrauchers kann dabei durch eine vorübergehende Änderung des Stromwandler-Übersetzungsverhältnisses durch Umschaltung des Transformators im Strecken-Umrichter erfolgen. Dies kann mit mechanischen Kontakten oder mit Halbleiterbauteilen selbsttätig erfolgen. Die Ansteuer-Schaltung wird insbesondere so ausgebildet, daß keine störenden Schaltlücken entstehen. Bei einer im Hinblick auf die Umschaltemaßnahmen besonders vorteilhaften Weiterbildung der Erfindung ist die Schaltungsanordnung derart ausgebildet, daß wenigstens zwei an der jeweiligen Stelle des Fernspeisekreises vorgesehene Gleichstromwandler mit ihren Eingängen in Serie und mit ihren Ausgängen parallel geschaltet sind und daß die durch die Gleichstromwandler gebildete Gleichstromwandler-Anordnung jeweils dadurch auf einen von mehreren vorgegebenen Werten des Ausgangsstromes einstellbar ist und daß die Gleichstromwandler mit ihren Ausgängen über Entkopplungsdioden einander parallelgeschaltet sind und daß der Ausgang jedes der zusätzlich zu einem ersten Gleichstromwandler vorgesehenen zusätzlichen Gleichstromwandler mittels eines durch eine Steuereinrichtung steuerbaren Schalters wenigstens annähernd kurzschließbar ist.

In weiterer Ausgestaltung der Erfindung wird die Schaltungsanordnung derart ausgebildet, daß die Steuereinrichtung zur Bildung eines den Kurzschluß auslösenden Steuersignals eine Auswerteeinrichtung zur Auswertung eines einen vorgegebenen Betriebszustand des Verbrauchers charakterisierenden Kriteriums enthält. Auf diese Weise läßt sich erreichen, daß die Zeit, in der ein erhöhter Strom fließt, besonders kurz gehalten werden kann und der Einschwingdauer der Verbraucher automatisch angepaßt wird.

Zweckmäßigerweise wird die Auswerteeinrichtung als hysteresebehafteter Komparator ausgebildet. Die Hysterese bezweckt, den aktivierten Zustand des Komparators nach Unwirksamschalten eines der Stromwandler weiter aufrechtzuerhalten. Die Hysterese läßt sich insbesondere dadurch gewinnen, daß ein eine Referenzspannung des Komparators bildender Spannungsteiler vom Ausgang des Komparators her entsprechend verändert wird.

In weiterer Ausgestaltung der Erfindung wird die Schaltungsanordnung derart ausgebildet, daß die aus dem Gleichstromwandler und wenigstens einem zusätzlichen Gleichstromwandler bestehende Stromwandleranordnung zusätzlich zum Verbraucher mit einer durch einen Konstantstromregler steuerbaren zusätzlichen Bürde versehen ist.

Als Kriterium für den Betriebszustand des Verbrauchers kann z.B. der durch den Verbraucher fließende Strom dienen. Als besonders zweckmäßig kann sich eine derartige Ausgestaltung der Schaltungsanordnung erweisen, daß bei wenigstens einem zusätzlichen Gleichstromwandler der an dessen Ausgang liegende Schalter durch den durch die zusätzliche Bürde fließenden Strom steuerbar ist. Dabei ergibt sich der Vorteil, daß sich die vorübergehende Aktivierung des zusätzlichen Stromwandlers bzw. von zusätzlichen Stromwandlern auf besonders einfache Weise in Verbindung mit einer Spannungsregelung realisieren läßt, die einen nur geringen Energieverbrauch im Stellglied benötigt.

Während des Einschwingvorganges des Verbrauchers wird durch wenigstens einen zusätzlichen Stromwandler ein zusätzlicher Strom geliefert, der an der Fernspeisequelle einen erhöhten Spannungsabfall zur Folge hat. In Weiterbildung der Erfindung lassen sich die Anforderungen an den zusätzlichen Stromwandler und an die Fernspeisequelle dadurch besonders niedrig halten, daß den Gleichstromwandlern ein Spannungswandler mit einer derart bemessenen Strombegrenzung angeschlossen ist, daß der Spannungswandler bei der niedrigsten Eingangsspannung innerhalb seines Arbeitsbereiches im eingeschwungenen Zustand noch mit Sicherheit den erforderlichen Strom aufnehmen kann.

Eine weitere Verringerung der Anforderungen an die Fernspeisequelle läßt sich in vorteilhafter Weise dadurch erzielen, daß die Gleichstromwandler auf der Seite des Fernspeisekreises mit einem Schaltzusatz versehen sind, der zwischen den Strompfaden der Fernspeiseschleife einen Querzweig mit einer Serienschaltung aus einem Schalter und einem Widerstand aufweist, der im Betriebszustand der Schaltungsanordnung bei geschlossener Fernspeiseschleife geöffnet ist und der bei Unterbrechungen der Fernspeiseschleife den Fernspeisekreis vor der Unterbrechungsstelle schließt und daß die Schalter jeweils mit einer Steuereinrichtung versehen sind, die den Schalter des Schaltzusatzes frühestens zum Zeitpunkt des ausgangsseitigen Kurzschließens eines der Gleichstromwandler zur Öffnung freigibt.

Der Schalter des Schaltzusatzes kann der Kontakt eines zeitverzögerten Relais sein. Eine andere vorteilhafte Möglichkeit zur Steuerung des Schalters besteht darin, daß der Schalter durch ein Steuersignal betätigt wird, das in einer Auswerteeinrichtung zur Auswertung eines einen vorgegebenen Betriebszustand des Verbrauchers charakterisierenden Kriteriums enthält. Von besonderem Vorteil kann dabei sein, daß die Steuereinrichtung zur Freigabe des im Querzweig des Schaltzusatzes liegenden Schalters die den ausgangsseitigen Schalter eines der Gleichstromwandler steuernde Steuereinrichtung ist.

Die Erfindung wird anhand der in den Figuren dargestellten Ausführungsbeispiele näher erläutert.

Es zeigen
Fig. 1 eine mit Gleichstrom-Reihenspeisung betriebene Nachrichtenübertragungsstrecke,
Fig. 2 den Aufbau einer Zwischenregeneratorstelle der in Fig. 1 gezeigten Nachrichtenübertragungsstrecke,
Fig. 3 eine mit konstantem Gleichstrom gespeiste Stromwandlereinrichtung mit einer durch einen Konstantspannungsregler gesteuerten zusätzlichen Bürde und
Fig. 4 einen mit Schaltzusätzen versehenen Fernspeisekreis einer Nachrichtenübertragungsstrecke.

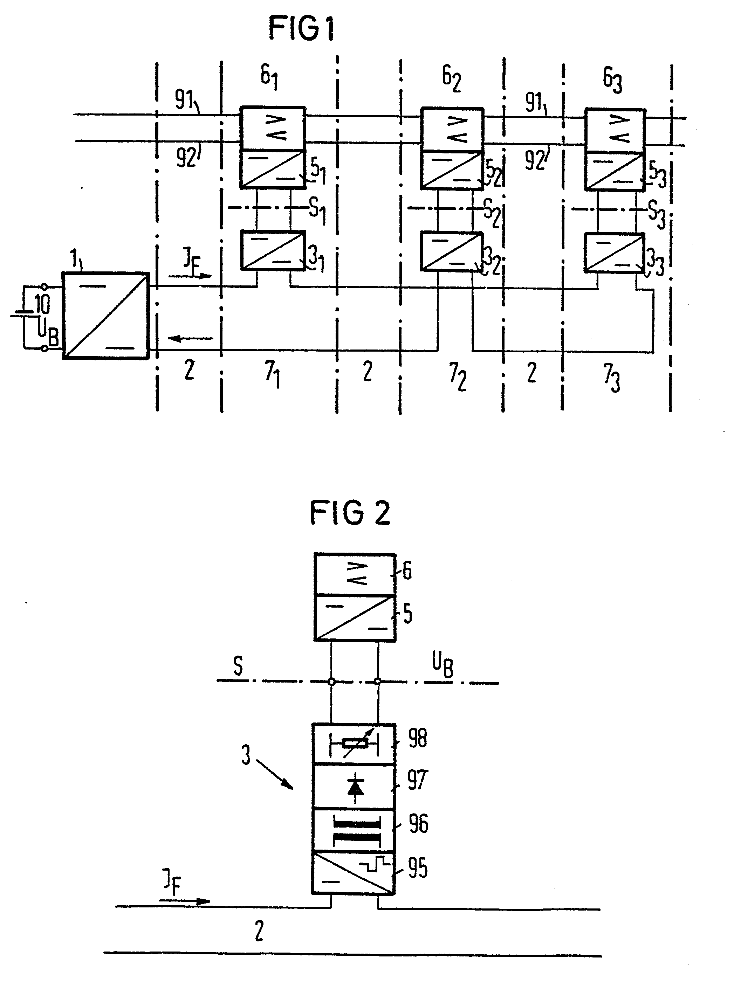

Bei der in Fig. 1 gezeigten Nachrichtenübertragungsstrecke werden Nachrichtensignale über die Lichtwellenleiter 91, 92 übertragen und in den Zwischenregeneratoren $6_1..6_3$ regeneriert. Die Regeneratoren $6_1..6_3$ werden mittels Gleichstrom-Reihenspeisung von einer speisenden Zwischenregeneratorstelle aus ferngespeist. In der speisenden Zwischenregeneratorstelle befindet sich das Fernspeisegerät 1, das aus der Amtsbatterie 10 mit der Betriebsspannung $U_B$ gespeist wird. Das Fernspeisegerät 1 liefert einen eingeprägten bzw. konstanten Fernspeisestrom $I_F$, der über eine Fernspeiseschleife, gebildet durch die beiden Leiter eines zusätzlichen Fernspeisekabels 2 gebildet ist. Die Strecken-Umrichter $3_1..3_3$ sind mit ihren Eingängen abwechselnd in den einen oder anderen Fernspeiseleiter der Fernspeise 2 eingeschleift. Die Streckenumrichter $3_1..3_3$ sind mit ihren Ausgängen an die Speiseeingänge der Zwischenregeneratoren $6_1..6_3$ geführt. Den Speiseeingängen der Zwischenregeneratoren ist jeweils ein Spannungswandler $5_1..5_3$ vorgeschaltet, der die vom Zwischenregenerator benötigten Speisespannungen aus der an der Schnittstelle S1..S3 angebotenen Betriebsspannung erzeugt. Diese Betriebsspannung stimmt mit der von der Amtsbatterie 10 gelieferten Betriebsspannung $U_B$ überein.

Die Strecken-Umrichter $3_1..3_3$ bieten die Möglichkeit, mit einfachen und einheitlichen Strecken-Umrichtern verschiedene Typen von Zwischenregeneratoren betreiben zu können. Jeder Zwischenregenerator besitzt einen eigenen Spannungswandler, der die jeweils notwendigen Betriebsspannungen aus einer einheitlich verwendeten Eingangsspannung von z.B. 60 V erzeugt. Der vom Fernspeisestrom betriebene Gleichstromwandler bzw. Strecken-Umrichter liefert nur diese eine Ausgangsspannung. Dieses Fernspeisekonzept hat auch den Vorteil, daß die gleichen Zwischenregeneratoren nicht nur auf der Strecke, sondern auch in der oberirdischen speisenden Zwischenregeneratorstelle durch Anschluß an die Amtsbatterie ohne besonderes Stromversorgungsgerät betrieben werden können. Fig. 2 zeigt diesen Aufbau im Prinzip.

Der zum Zwischenregenerator 6 gehörige Spannungswandler 5 wird vorzugsweise nach dem bekannten Prinzip des Eintakt-Durchfluß- oder Eintakt-Sperrwandlers aufgebaut. Diese Spannungswandler lassen sich platzsparend unterbringen und besitzen einen guten Wirkungsgrad. Sie weisen im Eingangs-Spannungsbereich eine nahezu konstante Leistungsaufnahme auf; mit abnehmender Eingangsspannung steigt deshalb die Stromaufnahme etwa proportional an.

Der dem Fernspeisekreis zugeordnete Streckenumrichter 3 enthält den Wechselrichter 95, der mit seinem Eingang in einen der beiden Strompfade des Fernspeisekreises 2 eingeschleift ist. An den Ausgang des Wechselrichters 95 ist über den Stromwandler 96 die Gleichrichterschaltung 97 angeschlossen. An die Gleichrichterschaltung 97 sind

die den Verbraucher bildende Kettenschaltung aus Spannungswandler 5 und Zwischenregenerator 6 und die zusätzliche, hinsichtlich ihres Widerstandswertes variierbare Ersatzlast 98 angeschlossen.

Der Streckenumrichter 3, der vom konstanten Fernspeisegleichstrom $I_F$ durchflossen wird, arbeitet als Gleichstromwandler, der den für den Betrieb des Zwischenregenerator-Spannungswandler erforderlichen Eingangsstrom liefert. Die veränderbare Ersatzlast 98 im Ausgangskreis des Streckenumrichters sorgt dafür, daß auch bei Entlastung des Ausganges der Spannungsabfall an der Gesamtbürde des Stromwandlerkreises gleich bleibt, d.h. daß die Ausgangsspannung $U_B$ lastunabhängig konstant bleibt. Beim Normalbetrieb der Strecke wird ein geringfügiger Stromfluß über die Ersatzlast 98 aufrechterhalten, der ein stabiles Arbeiten der Fernspeisestrecke auch bei dynamischen Lastschwankungen sicherstellt, da eine so aufgebaute Umrichter-Schaltung einen konstanten Eingangswiderstand aufweist.

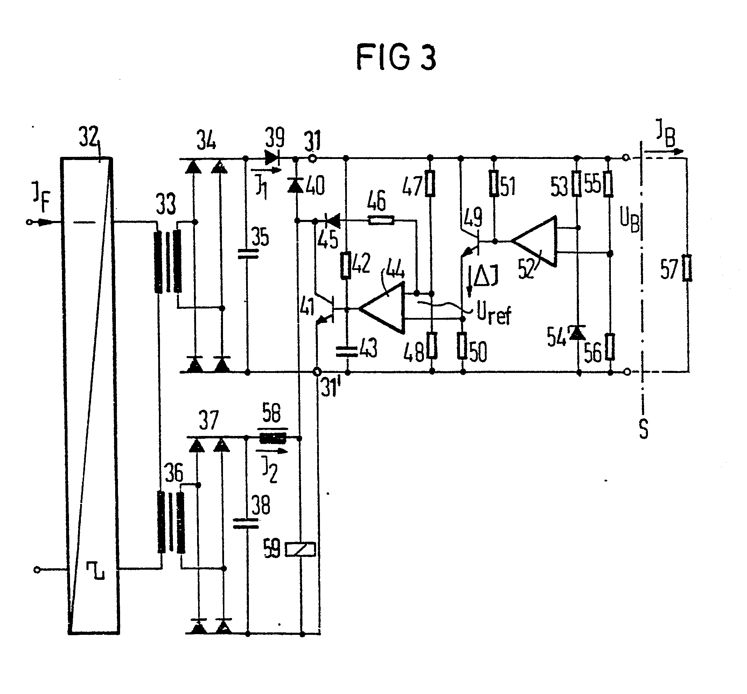

Der in Fig. 3 gezeigte Streckenumrichter 3 wird mit konstantem Gleichstrom, gebildet durch den Fernspeisestrom $I_F$ gespeist und gibt am Ausgang die konstante Spannung $U_A$ ab. Der Ausgang bildet eine Schnittstelle S, an die verschiedene Verbraucher über entsprechende Gleichspannungsumrichter angeschlossen werden können.

Der Fernspeisestrom $I_F$ fließt in den Eingang des Wechselrichters 32. Der Zweiweg-Gleichrichter 34 ist über den Transformator 33, der Zweiweg-Gleichrichter 37 über den Transformator 36 an den Wechselrichter 32 angeschlossen. Die als Brückengleichrichter ausgebildeten Zweiweg-Gleichrichter 34 und 37 sind mit ihren über Glättungskondensatoren 35 bzw. 38 abgeschlossenen Ausgangen auf der einen Seite unmittelbar und auf der anderen Seite über die Entkopplungsdiode 39 bzw. über die Drossel 58 und die Entkopplungsdiode 40 zusammengeführt. Außerdem ist der Ausgang des Gleichrichters 36 durch die Emitter-Kollektorstrecke des Transistors 41 direkt überbrückt. Ferner ist parallel zu diesem Ausgangskreis ein Relais 59 zur Spannungsüberwachung geschaltet, das die Außerbetriebnahme des zusätzlichen Gleichstromwandlers meldet.

Die Anordnung aus Wechselrichter 32, Transformator 33, Gleichrichter 34 und Kondensator 35 sowie die Anordnung aus Wechselrichter 32, Transformator 36, Gleichrichter 37 und Kondensator 38 stellen jeweils einen Gleichstromwandler dar.

Der gemeinsame Ausgang 31, 31' der Gleichrichter 34 und 37 ist an die Schnittstelle S geführt. Parallel zum gemeinsamen Ausgang 31, 31' liegt die Serienschaltung aus der Emitter-Kollektorstrecke des zwischen Basis und Kollektor mit dem Widerstand 51 beschalteten Transistors 49 und dem Widerstand 50. Diese Serienschaltung stellt für die aus den beiden Gleichstromwandlern 32,33,34,35 und 32,36,37,38 bestehende Stromwandleranordnung eine zusätzliche, variable Bürde dar und wird durch den Komparator 52 im Sinne einer Spannungsregelung gesteuert. Der Komparator 52 ist durch einen Operationsverstärker gebildet, dessen einer Eingang an einer Referenzspannung $U_{Ref}$ und dessen anderer Eingang am Abgriff des Spannungsteilers 55,56 liegt, der ebenfalls an den gemeinsamen Ausgang 31, 31' der Gleichrichter 34 und 37 angeschlossen ist.

Der Transistor 41 ist mit seiner Basis an den Ausgang des Komparators 44 angeschlossen, dessen einer Eingang am Verbindungspunkt zwischen Widerstand 50 und Emitter des Transistors 49 liegt und dessen anderer Eingang an der durch die Spannungsleiterwiderstände 47 und 48 gebildeten Referenzspannung $U_{Ref}$ liegt. Der Ausgang des Komparators 44 liegt außerdem am Abgriff einer RC-Serienschaltung 42,43, die ebenfalls am gemeinsamen Ausgang
31, 31' der Gleichrichterschaltung 34 und 37 liegt.

Ohne den zusätzlichen Gleichstromwandler ergäbe sich bei
der Inbetriebnahme des Fernspeisekreises nach Fig. 1 folgender Ablauf:

Die Spannungswandler $5_1..5_3$ an den Regeneratoren $6_1..6_3$
beginnen wegen ihres - im Hinblick auf eine möglichst
universelle Einsatzmöglichkeit beabsichtigten - weiten
Bereichs der Eingangsspannung schon bei niedrigen Spannungswerten, z.B. bei 30 V, zu arbeiten und nehmen dann,
um die Nenn-Ausgangsleistung liefern zu können, einen
entsprechend hohen Strom auf. Dieser Anlaufstrom wird
beim üblichen Anschluß an eine Amtsbatterie von dieser
abgegeben. Der Streckenumrichter $3_1..3_3$ kann hingegen
nur wenig mehr als den bei der Nennspannung erforderlichen Betriebsstrom liefern, so daß sein Ausgangskondensator bzw. auch der Eingangskondensator des Spannungswandlers bis auf eine Spannung entladen werden, bei der
der Spannungswandler nicht mehr arbeiten kann. Nach folgender Wiederaufladung dieser Kondensatoren beginnt der
nächste kurzzeitige Arbeitszyklus. Am Ausgang der Spannungswandler entsteht eine nur geringe Spannung und eine
Inbetriebnahme der Strecke ist damit im betrachteten Fall
unmöglich.

Damit dem Spannungswandler auch bei niedriger Eingangsspannung ausreichend Strom geliefert wird, müßte der
Stromwandler des Streckenumrichters 3 für den nur kurzzeitig benötigten Maximalstrom ausgelegt werden mit der
Folge, daß beim normalen Betrieb der dann überschüssige
Strom über die Ersatzlast im Ausgangskreis verlustreich
abgeleitet wird.

Die in Fig. 3 gezeigte Schaltungsanordnung ermöglicht eine vorübergehende Lieferung eines erhöhten Ausgangsstromes ohne Umschalte-Elektronik. Der Streckenumrichter 3 enthält einen zusätzlichen Stromwandler-Transformator 36, der im Wechselstrom-Eingangskreis in Reihe zum
Transformator 33 des Leistungskreises geschaltet ist und
dessen Ausgangskreis nach Gleichrichtung über die Dioden
39 und 40 entkoppelt parallel zum Ausgangskreis des Leistungsteiles geschaltet ist. Der Strom des Zusatzkreises
addiert sich zum Strom des Leistungskreises. Seine Stärke wird so gewählt, daß insgesamt der vom Spannungswandler des Zwischenregenerators zum Anschwingen benötigte
Strom abgegeben wird. Sobald die Anlaufphase beendet ist,
sinkt die Stromaufnahme des Zwischenregenerator-Spannungswandlers auf den Nennwert und der zusätzliche Stromanteil
wird im Ausgangskreis des Streckenumrichters über die Ersatzlast 49, 50 abgeleitet. Die erhöhte Stromableitung
ist ein Kriterium dafür, daß der Einschaltevorgang abgeschlossen ist. Es wird daraufhin der Zusatzstromkreis
vor der Entkoppeldiode 40 kurzgeschlossen, worauf dieser
Kreis praktisch auch am Eingang des Umrichters keinen zusätzlichen Spannungsabfall mehr erzeugt.

Das selbsttätige Außerbetriebnehmen des zusätzlichen
Gleichstromwandlers wird mittels des Transistors 41 in
Reihenschaltung mit der Schutzdrossel 58 erreicht, der
vom Stromfluß durch die Ersatzlast zeitverzögert angesteuert wird. Damit die Ansteuerung des Transistors 41
über den Komparator 44 infolge des Fortfalls der erhöhten Stromableitung nicht wieder aufgehoben wird, wird
der Spannungsteiler für die Referenzspannung durch die
nun wirksame Parallelschaltung des Widerstandes 46 zum
Widerstand 48 so verändert, daß die Refernzspannung niedriger als der nun geringere Spannungsabfall des Differenzstromes $\Delta I$ am Widerstand 50 wird.

Die mit Hilfe des RC-Gliedes 42, 43 bewirkte Zeitverzögerung ist im Hinblick darauf bemessen, daß die zum Aufladen der Kondensatoren im Eingangs- und Ausgangskreis des Spannungswandlers benötigte Ladung $Q = C_i U_i$ von dem Teil des Ausgangsstromes geliefert wird, der nach Abzug des zur Versorgung des Verbrauchers benötigten Stromanteiles $I_B$ verbleibt.

Somit muß mindestens $t > \dfrac{\Sigma C_i U_i}{I_A - I_B}$ sein

$I_A$ erhöhter Ausgangsstrom des Umrichters

$I_B$ vom Spannungswandler nach Anschwingen für den Betrieb des Verbraucher bei niedrigster Eingangsspannung benötigter Strom.

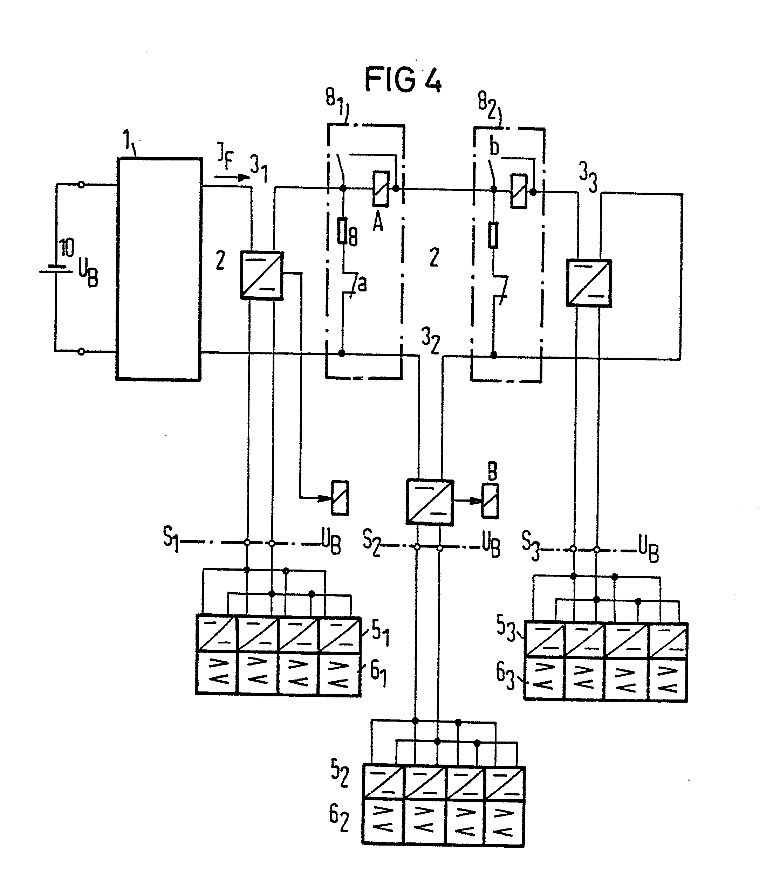

Die vorübergehende Stromlieferung des zusätzlichen Gleichstromwandlers 32,36,37 über den Lastwiderstand bewirkt einen entsprechenden zusätzlichen Spannungsabfall am Eingang des Streckenumrichters, der wiederum eine Erhöhung der Fernspeisespannung am Ausgang des Fernspeisegerätes 1 zur Folge hat. Das Fernspeisegerät 1 muß deshalb in der Lage sein, kurzzeitig diese höhere Spannung bzw. Leistung abzugeben. Während der den Zwischenregenerator-Spannungswandlern $5_1..5_3$ gelieferte Anschwingstrom möglichst hoch sein soll, sollte die Spannungserhöhung für das Fernspeisegerät 1 möglichst gering sein. Dies ist bei Nachrichtenübertragungsstrecken mit mehreren Regeneratorfeldern nur dann der Fall, wenn vermieden wird, daß Spannungswandler in mehreren Zwischenregenerator-Stellen gleichzeitig anschwingen. Dies läßt sich mit Hilfe des in Fig. 4 gezeigten Fernspeisekreises erreichen.

Der Fernspeisekreis nach Fig. 4 dient zur Fernspeisung für eine Lichtwellenleiter-Strecke für drei Nachrichtenübertragungseinrichtungen. Die Zwischenregeneratorstellen werden an den Schnittstellen S1..S3 mit einer einheitlichen Betriebsspannung $U_B$ gespeist.

- 13 -   VPA   82 P 1568 E

Hinter den Streckenumrichtern $3_1$ und $3_2$ ist jeweils ein Schaltzusatz $8_1$ bzw. $8_2$ in den Fernspeisekreis eingefügt. Der Schaltzusatz enthält jeweils in einem weiterführenden Strompfad der Fernspeiseschleife 2 ein Relais A und in einem zwischen Streckenumrichter $3_1$ und Relais A liegenden Querzweig eine Serienschaltung aus einem Widerstand 8 und einem Ruhekontakt a des Relais A.

An die Streckenumrichter $3_1$ und $3_3$ sind jeweils mehrere Gleichspannungswandler angeschlossen, wobei jeder in der betreffenden Zwischenverstärkerstelle befindliche Zwischenregenerator einen eigenen Gleichspannungswandler enthält.

Der Schaltzusatz in jeder Zwischenregeneratorstelle schaltet zeitverzögert erst dann weiter, wenn der Anschwingvorgang in dieser Zwischenregeneratorstelle abgeschlossen ist. Im gezeigten Beispiel wird der Zeitpunkt der Beendigung des Einschwingvorganges durch das Relais B gemeldet. Als Kriterium dient vorzugsweise entsprechend Fig.3 die Außerbetriebnahme des zusätzlichen Gleichstromwandlers. Der Arbeitskontakt b des Relais B liegt parallel zur Wicklung des Relais A des Schaltzusatzes 8 und überbrückt diese solange, wie der Einschwingvorgang andauert bzw. der zusätzliche Stromwandler den Verbraucher mitspeist. Ab Außerbetriebnahme des zusätzlichen Gleichstromwandlers wird der Arbeitskontakt b geöffnet und somit das Ansprechen des Relais B möglich gemacht. Hierdurch wird der Schaltzusatz funktionsfähig und ist in der Lage, bei intaktem Fernspeisekreis die Querverbindung aufzuheben, so daß das nachfolgende Feld mit dem vollen Fernspeisestrom versorgt wird.

Der Schaltzusatz bietet darüberhinaus den bekannten Vorteil, daß auch bei Streckenunterbrechungen die Ortung der Fehlerstelle über das systemeigene Überwachungsverfahren möglich ist, da ja die Speiseschleife vor der Unterbrechungsstelle wieder geschlossen wird.

Eine weitere Verringerung der Anforderung an das Fernspeisegerät 1 läßt sich dadurch erreichen, daß der Spannungswandler $5_1..5_3$ des Zwischenregenerators eine Begrenzung des Eingangsstromes besitzt. Der Grenzwert des Eingangsstromes wird dabei nur wenig über jene Stromstärke gelegt, die der Spannungswandler $5_1..5_3$ bei der niedrigsten Eingangsspannung innerhalb seines Arbeitsbereiches im eingeschwungenen Zustand zum stabilen Arbeiten mit Sicherheit benötigt.

9 Patentansprüche
4 Figuren

Patentansprüche

1. Schaltungsanordnung zur Fernspeisung von elektrischen Verbrauchern aus einer Einrichtung zur Fernspeisung mittels Gleichstrom-Reihenspeisung aus wenigstens einer Konstantstromquelle, wobei an verschiedenen Stellen des Fernspeisekreises jeweils wenigstens ein Verbraucher über eine wenigstens einen Gleichstromwandler enthaltende Stromwandleranordnung an den Fernspeisekreis anschließbar ist, d a d u r c h   g e k e n n z e i c h n e t, daß die Stromwandleranordnung durch eine Steuereinrichtung zeitverzögert oder durch ein den Betriebszustand des Verbrauchers charakterisierendes Kriterium hinsichtlich ihrer Stromabgabe an den Verbraucher variierbar ist.

2. Schaltungsanordnung nach Anspruch 1, d a d u r c h   g e k e n n z e i c h n e t, daß wenigstens zwei an der jeweiligen Stelle des Fernspeisekreises vorgesehene Gleichstromwandler mit ihren Eingängen in Serie und mit ihren Ausgängen parallel geschaltet sind und daß die durch die Gleichstromwandler gebildete Gleichstromwandler-Anordnung jeweils dadurch auf einen von mehreren vorgegebenen Werten des Ausgangsstromes einstellbar ist und daß die Gleichstromwandler (42..44) mit ihren Ausgängen über Entkopplungsdioden (48,49) einander parallelgeschaltet sind und daß der Ausgang jedes der zusätzlich zu einem ersten Gleichstromwandler vorgesehenen zusätzlichen Gleichstromwandler (45..47) mittels eines durch eine Steuereinrichtung steuerbaren Schalters wenigstens annähernd kurzschließbar ist.

3. Schaltungsanordnung nach Anspruch 1 oder 2, d a d u r c h   g e k e n n z e i c h n e t, daß die Steuereinrichtung zur Bildung eines den Kurzschluß auslösenden Steuersignals eine Auswerteeinrichtung zur Auswertung eines einen vorgegebenen Betriebszustand des

Verbrauchers charakterisierenden Kriteriums ($U_q$) enthält.

4. Schaltungsanordnung nach einem der Ansprüche 1 bis 3,
d a d u r c h   g e k e n n z e i c h n e t ,
daß die Auswerteeinrichtung als hysteresebehafteter Komparator ausgebildet ist.

5. Schaltungsanordnung nach einem der Ansprüche 1 bis 4,
d a d u r c h   g e k e n n z e i c h n e t ,
daß die aus dem Gleichstromwandler und wenigstens einem zusätzlichen Gleichstromwandler bestehende Stromwandleranordnung zusätzlich zum Verbraucher mit einer durch einen Konstantspannungsregler steuerbaren zusätzlichen Bürde versehen ist.

6. Schaltungsanordnung nach Anspruch 5,
d a d u r c h   g e k e n n z e i c h n e t ,
daß bei wenigstens einem zusätzlichen Gleichstromwandler (45..47) der an dessen Ausgang liegende Schalter durch den durch die zusätzliche Bürde (54,55) fließenden Strom ($\Delta I$) steuerbar ist.

7. Schaltungsanordnung nach einem der Ansprüche 1 bis 6,
d a d u r c h   g e k e n n z e i c h n e t ,
daß den Gleichstromwandlern ein Spannungswandler mit einer derart bemessenen Strombegrenzung angeschlossen ist, daß der Spannungswandler bei der niedrigsten Eingangsspannung innerhalb seines Arbeitsbereiches im eingeschwungenen Zustand noch mit Sicherheit den erforderlichen Strom aufnehmen kann.

8. Schaltungsanordnung nach einem der Ansprüche 1 bis 7,
d a d u r c h   g e k e n n z e i c h n e t ,
daß die Gleichstromwandler auf der Seite des Fernspeisekreises mit einem Schaltzusatz versehen sind, der zwischen den Strompfaden der Fernspeiseschleife einen Querzweig mit einer Serienschaltung aus einem Schalter und einem Widerstand aufweist, der im Betriebszustand der Schaltungsanordnung bei geschlossener Fernspeiseschleife geöffnet ist und der bei Unterbrechungen der Fernspeiseschleife den Fernspeisekreis vor der Unterbrechungsstelle schließt und daß die Schalter jeweils mit einer Steuereinrichtung versehen sind, die den Schalter des Schaltzusatzes frühestens zum Zeitpunkt des ausgangsseitigen Kurzschließens eines der Gleichstromwandler zur Öffnung freigibt.

9. Schaltungsanordnung nach Anspruch 8,
d a d u r c h   g e k e n n z e i c h n e t,
daß die Steuereinrichtung zur Freigabe des im Querzweig des Schaltzusatzes liegenden Schalters die den ausgangsseitigen Schalter eines der Gleichstromwandler steuernde Steuereinrichtung ist.

FIG 1

FIG 2

FIG 3

2/3

0099565

FIG 4